# EUROPEAN PATENT APPLICATION

(11) **EP 2 884 750 A1**
(43) Date of publication of application: **17.06.2015**
(21) Application number: 13848890.3
(22) Date of filing: 07.08.2013
(51) Int. Cl.: H04N 21/00

(54) **MONITORING METHOD AND INTERNET PROTOCOL TELEVISION SET TOP BOX**

(30) Priority: 26.10.2012 CN 201210415273
(71) Applicant: ZTE Corporation, Shenzhen, Guangdong 518057 (CN)
(72) Inventor: GUAN, Tianyun, Shenzhen Guangdong 518057 (CN); SHEN, Beijie, Shenzhen Guangdong 518057 (CN); ZHANG, Jidong, Shenzhen Guangdong 518057 (CN); CHENG, Xi, Shenzhen Guangdong 518057 (CN)
(74) Representative: Price, Nigel John King
(86) International application number: PCT/CN2013/080970
(87) International publication number: WO 2014/063511

(57) **Abstract**

A monitoring method and an Internet Protocol Television (IPTV) set top box, including: an IPTV set top box registering with a monitoring service management server; and after registering with the monitoring service management server successfully, the IPTV set top box receiving a call request, and when the call request carries a monitoring identification configured by the monitoring service management server, answering the call, and sending an audio acquired by an audio acquisition device and/or a video acquired by a video acquisition device to a terminal initiating the call request. The above technical solution applies the currently widely-used IPTV set top box in the common family to perform audio monitoring and video surveillance, and can make a full use of the present IPTV network, IP network and communication network to achieve the goal of performing monitoring and surveillance on the audio and video of the positions where the microphone and camera connecting with the IPTV set top box are located through various audio and video terminals.

## Description

### Technical Field

The present invention relates to the monitoring and surveillance field and the communication technology field, and particularly, to a monitoring method and an internet protocol television set top box.

### Background of the Related Art

As various trades increase their requirement for audio monitoring and video surveillance and people enhance their security awareness, audio monitoring and video surveillance is moving from the conventional public transportation, bank security, schools, factories, diggings and so on to more and more other professional fields, and the audio monitoring and video surveillance technology is moving in the direction from analog monitoring and surveillance to digital monitoring and surveillance.

At present, the audio monitoring and video surveillance system needs to set up a private network, and uses special lines to connect collection terminals such as microphones, cameras and so on distributed at various points to the monitoring and surveillance server; the monitoring and surveillance server encodes and stores the collected multiple paths of audios and videos respectively; it is required to support multi-path concurrency decoding and playing when checking, therefore, the requirement on the processing performance and storage capability of the monitoring and surveillance server is very high. Hence, the present monitoring and surveillance system has features of huge devices, complex networking, high cost, and complicated engineering construction and so on, and can only be applied in the professional monitoring and surveillance field, and is hard to be benefit ordinary people.

### Summary of the Invention

The technical problem of the embodiments of the present invention is to provide a monitoring method and an Internet Protocol Television (IPTV) set top box, to reduce the equipment cost, the networking complexity and the construction difficulty for performing audio monitoring and video surveillance.

To solve the above technical problem, the following technical solution is adopted:
A monitoring method, comprising:
   an Internet Protocol Television (IPTV) set top box registering with a monitoring service management server; and
   after registering with the monitoring service management server successfully, the IPTV set top box receiving a call request, and answering the call when the call request carries a monitoring identification configured by the monitoring service management server, and sending an audio acquired by an audio acquisition device and/or a video acquired by a video acquisition device to a terminal initiating the call request.

Optionally, the step of an IPTV set top box registering with a monitoring service management server comprises:
the IPTV set top box registering with an IPTV server, and acquiring an account, a registered address and a port number; and
the IPTV set top box sending a registering request to the monitoring service management server according to the account, the registered address and the port number.

Optionally, the step of an IPTV set top box registering with a monitoring service management server comprises:
the IPTV set top box registering with an IPTV server, and acquiring an account, a registered address and a port number; and
the IPTV set top box sending a registering request to a Next Generation Network (NGN) core network or an IP Multimedia System (IMS) core network according to the account, the registered address and the port number, and registering with the monitoring service management server through the NGN core network or the IMS core network.

Optionally, the method further comprises:
after registering with the monitoring service management server successfully, the IPTV set top box establishing a data link channel with the monitoring service management server, inquiring from the monitoring service management server for whether the IPTV set top box has monitoring permission through the established data link channel, and in a case of having monitoring permission, inquiring for whether a monitoring switch is turned on and a list of calling numbers with permission of initiating monitoring.

Optionally, the method further comprises:
the IPTV set top box turning on or turning off the monitoring switch through the data link channel according to an instruction of a subscriber, and updating the list of calling numbers with permission of initiating monitoring; or
the monitoring service management server providing a subscriber with an interface, receiving an instruction of turning on or turning off the monitoring switch from the subscriber, and updating for the list of calling numbers with permission of initiating monitoring.

Optionally, the step of receiving a call request comprises:
the IPTV set top box receiving the call request from the monitoring service management server;
wherein, the monitoring service management server sends the call request configured with the monitoring identification to the IPTV set top box when the monitoring switch of the IPTV set top box is turned on and a number of the terminal initiating the call request is included in the list of calling numbers with permission of initiating monitoring.

Optionally, the step of receiving a call request comprises:
the IPTV set top box receiving the call request from a Next Generation Network (NGN) core network or an IP Multimedia System (IMS) core network;
wherein, after receiving the call request from a medium and signaling gateway, the NGN core network or the IMS core network sends the call request to the monitoring service management server, the monitoring service management server sends the call request configured with the monitoring identification to the NGN core network or the IMS core network when a monitoring switch of the IPTV set top box is turned on and a number of the terminal initiating the call request is included in the list of calling numbers with permission of initiating monitoring, and the NGN core network or the IMS core network sends the call request to the IPTV set top box.

An Internet Protocol Television (IPTV) set top box, comprising: a register unit, a call connecting unit and a monitoring processing unit, wherein:
the register unit is configured to: register with a monitoring service management server;
the call connecting unit is configured to: receive a call request, and answer the call when the call request carries a monitoring identification configured by the monitoring service management server;
the monitoring processing unit is configured to: send an audio acquired by an audio acquisition device and/or a video acquired by a video acquisition device to a terminal initiating the call request.

Optionally, the monitoring processing unit is further configured to: establish a data link channel with the monitoring service management sever after the register unit registers with the monitoring service management server successfully, inquire from the monitoring service management server for whether the monitoring processing unit has a monitoring permission through the established data link channel, and in a case of having the monitoring permission, inquire for whether a monitoring switch is turned on and a list of calling numbers with permission of initiating monitoring.

Optionally, the monitoring processing unit is further configured to: turn on or turn off the monitoring switch through the data link channel according to an instruction of a subscriber, and update the list of calling numbers with permission of initiating monitoring.

Optionally, the register unit is configured to perform registering by means of:
registering with an IPTV server, acquiring an account, a registered address and a port number; and sending a register request to the monitoring service management server according to the account, the registered address and the port number; or
registering with an IPTV server, acquiring an account, a registered address and a port number; sending the register request to a Next Generation Network (NGN) core network or an IP Multimedia System (IMS) core network according to the account, the registered address and the port number, and registering with the monitoring service management server through the NGN core network or the IMS core network.

Optionally, the call connecting unit is configured to receive the call request by means of:
receiving the call request from the monitoring service management server; wherein, the monitoring service management server sends the call request configured with the monitoring identification to the call connecting unit when a monitoring switch of the IPTV set top box is turned on and a number of the terminal initiating the call request is included in the list of calling numbers with permission of initiating monitoring; or
receiving the call request from the Next Generation Network (NGN) core network or the IP Multimedia System (IMS) core network; wherein, after receiving the call request from a medium and signaling gateway, the NGN core network or the IMS core network sends the call request to the monitoring service management server, the monitoring service management server sends the call request configured with the monitoring identification to the NGN core network or the IMS core network when the monitoring switch of the IPTV set top box is turned on and a number of the terminal initiating the call request is included in the list of calling numbers with permission of initiating monitoring, and the NGN core network or the IMS core network sends the call request to the call connecting unit.

The above technical solution applies the currently widely used IPTV set top box in the common family to perform audio monitoring and video surveillance. As long as providing the IPTV set top box with new microphone and camera, performing software update on the set top box, and providing the monitoring service management server in the IPTV system, the above technical solution can make a full use of the present IPTV network, IP network and communication network to achieve the goal of performing monitoring and surveillance on the audio and video of the positions where the microphone and camera connecting with the IPTV set top box are located through various audio and video terminals, overcoming the shortcomings such as the audio monitoring and video surveillance system having huge equipments, complex networking, high cost, and complicated engineering construction and so on.

### Brief Description of Drawings

FIG. 1 is the framework diagram of the monitoring system according to an embodiment of the present invention;
FIG. 2 is the flowchart diagram of the first mode of the monitoring method according to an embodiment of the present invention;
FIG. 3 is the flowchart diagram of the second mode of the monitoring method according to an embodiment of the present invention;
FIG. 4 is the framework diagram of the IPTV set top box according to an embodiment of the present invention.

### Preferred Embodiments of the Invention

The monitoring system according an embodiment of the present invention comprises: an IPTV set top box, an audio acquisition device (such as microphone), a video acquisition device (such as a camera) and a monitoring service management server.

The IPTV set top box may use a common interface (such as a USB interface and so on) to connect with the microphone and camera, and may also use a wireless interface (such as Bluetooth and so on) to connect with the microphone and camera.

The microphone may be an ordinary microphone, and may also be integrated into the camera, connecting with the IPTV set top box via a common interface (such as a USB interface and so on) or a wireless interface (such as Bluetooth and so on).

The camera may be an ordinary camera or a high definition camera, a camera integrated with microphone, or a digital camera or a digital video camera supporting real-time video output, connecting with the IPTV set top box via a common interface (such as a USB interface and so on) or a wireless interface (such as Bluetooth and so on).

The IPTV set top box has the functions of registering with session initial protocol (SIP) and listening the SIP call, and has the function of registering with the monitoring service management server, as well as a certain management function including managing the list of calling numbers with permission of initiating monitoring, starting and stopping the audio monitoring and video surveillance functions and so on. The IPTV set top box can also encode and send the audios, videos acquired from the camera and the microphone, and perform SIP register and logoff according to SIP accounts allocated by the IPTV server.

The monitoring service management server has functions such as ordinary SIP account management, monitoring SIP account authentication management, SIP routing management, monitoring routing management and monitoring medium type control and so on, provides WEB portals for the administrator to perform back-stage management and provides personal WEB portals for subscribers to set monitoring switches, and manages the list of calling numbers with permission of initiating monitoring.

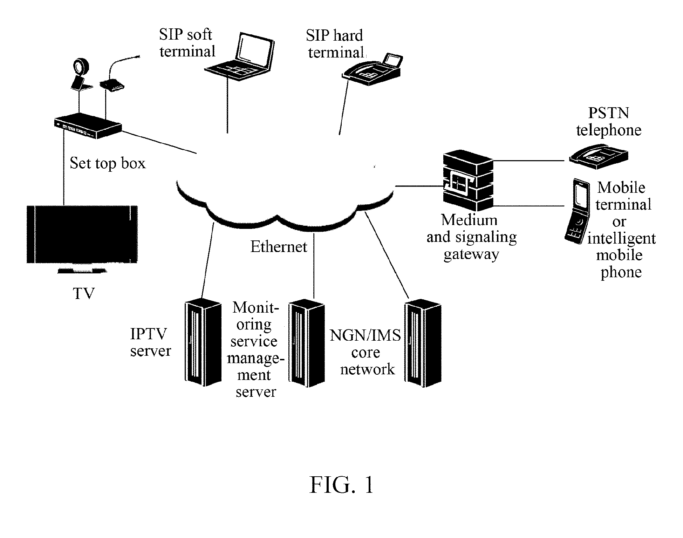

After the above devices are installed, the following two solutions are adopted to implement the monitoring method of the present embodiment according to different ways of SIP account configuration and system networking (please refer to FIG. 1):
Solution A: SIP accounts are allocated by the monitoring service management server. This solution mainly comprises the following steps 1- 7.

In Step 1, the monitoring service management server configures a number of SIP accounts, and configures part or all of the SIP accounts with monitoring permission;

In Step 2, it is to open the audio monitoring and video surveillance service for appointed IPTV subscribers in the IPTV system (monitoring system), and bind the IPTV subscribers with unique SIP accounts with monitoring permission configured by the monitoring service management service respectively;

In Step 3, the IPTV set top box is initiated and registers with the IPTV server, and acquires the information such as the allocated SIP account, registered address and port number and so on after the register succeeds;

In Step 4, the IPTV set top box initiates an SIP register to the monitoring service management server according to the information such as the acquired SIP account, registered address and port number and so on, establishes a data link channel with the monitoring service management server by establishing a new route (such as a route in HTTP protocol) after the register succeeds, inquires for whether the IPTV set top box has monitoring permission, and, in the case that the IPTV set top box has monitoring permission, inquires for whether the monitoring switch is turned on and the set list of calling numbers with permission of initiating monitoring;

In Step 5, the IPTV subscriber turns on the monitoring switch through the IPTV set top box, sets the calling number with the permission of initiating monitoring, and synchronizes immediately the set content to the monitoring service management server through the data link channel with the monitoring service management server; or the IPTV subscriber registers with the personal WEB portal provided by the monitoring service management server, and turns on the monitoring switch directly and sets the calling number with the permission of initiating monitoring;

In Step 6, some IPTV set top box, SIP terminal or SIP terminal of other type (such as an SIP hard terminal, an SIP soft terminal on various operation system platforms etc.) registering with the monitoring service management server initiates an SIP call request to the IPTV set top box; when the SIP call request INVITE is routed to the monitoring service management server, the monitoring service management server finds that the called party (the IPTV set top box) has started the audio monitoring and video surveillance function and the calling number is a calling number with permission of initiating monitoring, so adds an monitoring identification to the head field of the INVITE (for example, adds *Monitor* to P-Service-Param) when calling downward the called party;

In Step 7, when the IPTV set top box receives the SIP call request with monitoring identification, it starts a monitoring flow, accepts the monitoring request automatically, and only sends the acquired audio and/or video medium in the negotiation result, not receiving audio and/or video medium.

Until now, the monitoring function is established successfully, and the audio and/or video acquired by the IPTV set top box is sent unidirectionally to the calling SIP terminal initiating this monitoring request. When the monitoring finishes, the calling SIP terminal just sends BYE to end the SIP session.

Solution B: the SIP accounts are allocated by the Next Generation Network (NGN) core network or the IP Multimedia Subsystem (IMS) core network. This solution mainly comprises the following steps 1-7.
In Step 1, the NGN core network or IMS core network configures a number of SIP accounts, configures the service subscription, and directs the register and call service to the monitoring service management server; at the same time, the monitoring service management server configures the same SIP accounts, and configures part or all of the SIP accounts with monitoring permission;
In Step 2,: it is to open audio monitoring and video surveillance service for appointed IPTV subscribers in the IPTV system, and band the IPTV subscribers with unique SIP accounts with monitoring permission configured by the monitoring service management server respectively;
In Step 3, the IPTV set top box is started and registers with the IPTV server, and acquires information such as the allocated SIP account, registered address and port number and so on after the register succeeds;
In Step 4, the IPTV set top box initiates an SIP register to the NGN core network or IMS core network according to the information such as the acquired SIP account, registered address and port number and so on, and registers with the monitoring service management server through the NGN core network or IMS core network, establishes a data link channel with the monitoring service management server by establishing a new route (such as a route in HTTP protocol) after the register of the IPTV set top box succeeds, inquires for whether the IPTV set top box has the monitoring permission, and, in the case that the IPTV set top box has the monitoring permission, inquires for whether the monitoring switch is turned on and the set list of calling numbers with permission of initiating monitoring;
In Step 5, the IPTV subscriber turns on the monitoring switch through the IPTV set top box, sets the calling number with the permission of initiating monitoring, and synchronizes immediately the set content to the monitoring service management server through the data link channel with the monitoring service management server; or the IPTV subscriber registers with the personal WEB portal provided by the monitoring service management server, and turns on the monitoring switch directly and sets the calling number with the permission of initiating monitoring;
In Step 6, some SIP terminal registering with the NGN core network or IMS core network initiates an SIP call request, the called number is an SIP account registered by the IPTV set top box, or some mobile phone or PSTN telephone initiates a call request, and the called number is an SIP account registered by the IPTV set top box; the call request will be converted by a signaling gateway as INVITE to be routed to the NGN core network or IMS core network; when INVITE is routed by the NGN core network or IMS core network to the monitoring service management server, the monitoring service management server finds the called party (the IPTV set top box) has started the audio monitoring and video surveillance function and the calling number is a calling number with the permission of initiating monitoring, so the monitoring service management server adds the monitoring identification to the head field of the INVITE (for example, adds *Monitor* to the P-Service-Param) when calling downward the called party;
In Step 7, when the IPTV set top box receives the SIP call request with monitoring identification, it starts a monitoring flow, accepts the monitoring request automatically, and only sends the acquired audio and/or video medium in the negotiation result, not receiving audio and/or video medium.

Until now, the monitoring function is established successfully, and the audio and/or video acquired by the IPTV set top box is sent unidirectionally to the terminal initiating this monitoring request such as a calling SIP terminal, mobile telephone, or PSTN telephone and so on. When the monitoring finishes, the calling SIP terminal just sends BYE to end the SIP session.

The present embodiment provides a method for implementing audio monitoring and video surveillance at a low cost by making a full use of the widely used family IPTV set top box and the low-cost microphone and camera, wherein, the audios and videos of the positions where the microphone and camera are located are sent to the host computer by answering the audio and video SIP call from the calling party, thereby achieving the goal of performing audio monitoring and video surveillance on the positions where the microphone and camera are located.

The present embodiment is not limited to the simultaneous application of microphone and camera; it may only use the microphone to perform audio monitoring, or only use the camera to perform the video surveillance; choose which one to use according to the medium type supported by the monitoring party; it may also be controlled by the monitoring service management server.

Optionally, the present embodiment is not limited to sending the audio and video medium unidirectionally to the calling terminal from the set top box; bidirectional sending may also be adopted, wherein the audio and video mediums of the calling terminal are sent to the set top box, and are further sent to the television by the set top box for playing, so as to implement the bidirectional audio and video communication function.

The present system and method are further described in detail in the following by the specific embodiments in combination with the accompanying drawings.

### Embodiment 1:

An IPTV set top box is taken as an example of the calling terminal in the present embodiment, and the allocated calling SIP number of the calling terminal is 999, however, the calling terminal in this text is not limited to the IPTV set top box, for example, it may be an SIP soft terminal or SIP hard terminal installed on a computer, or an SIP client installed on an intelligent mobile phone etc., as long as the calling terminal supports the standard SIP register and call, and registers with the monitoring service management server.

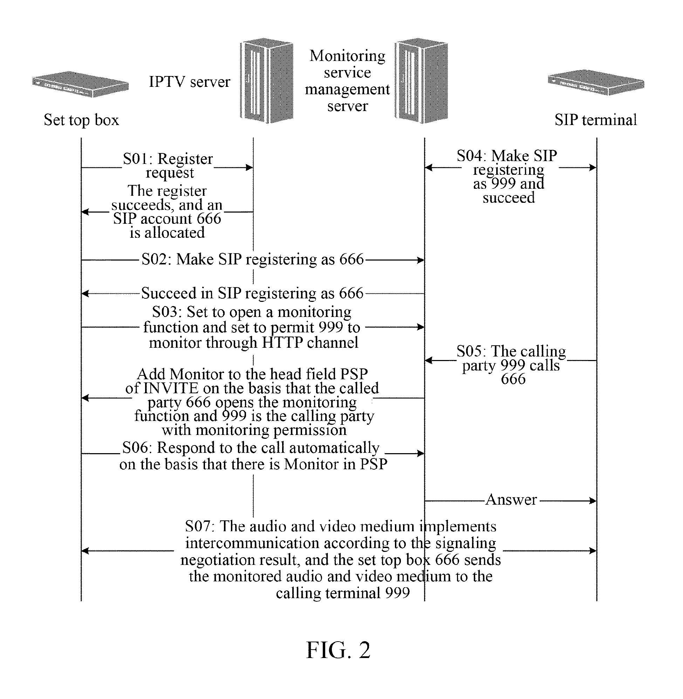

As shown in FIG. 2, the monitoring method according to the present embodiment comprises steps S01-07:
In S01, when the IPTV set top box registers with the IPTV server, the IPTV server allocates the IPTV set top box an SIP account 666 and a password, and the registered address and port number of the monitoring service management server.
In S02, the IPTV set top box initiates an SIP register to the monitoring service management server; after the register succeeds, the IPTV set top box may receive the SIP call.
In S03, the IPTV set top box establishes the data link channel with the monitoring service management server by HTTP, opens the monitoring function, sets the calling number 999 as a calling number with the permission of initiating monitoring, and synchronizes the calling number 999 to the monitoring service management server after the setting completes.
In S04, the calling SIP terminal succeeds in registering with the monitoring service management server as 999.
In S05, 999 calls 666; INVITE arrives at the monitoring service management server; the monitoring service management server adds Monitor to the head field P-Service-Param of the INVITE sent to 666 on the basis that 666 has opened the monitoring function and 999 has been set as the calling number with permission of initiating monitoring.
In S06, 666 finds there is Monitor in the received INVITE, and responds to the call automatically.
In S07, the called party 666 sends the audio and video medium to the calling party 999 according to the SDP negotiation result; the calling party 999 displays the audio and video of the positions where the microphone and camera of the IPTV set top box, on which 666 is located, are located, thereby monitoring and surveillance are started successfully.

### Embodiment 2:

A mobile phone is taken as an example of the calling terminal in the present embodiment, and the calling number is 999, however, the calling terminal in this text is not limited to the mobile phone, for example, it may be an SIP soft terminal or SIP hard terminal installed on a computer, or an SIP client installed on an intelligent mobile phone etc..

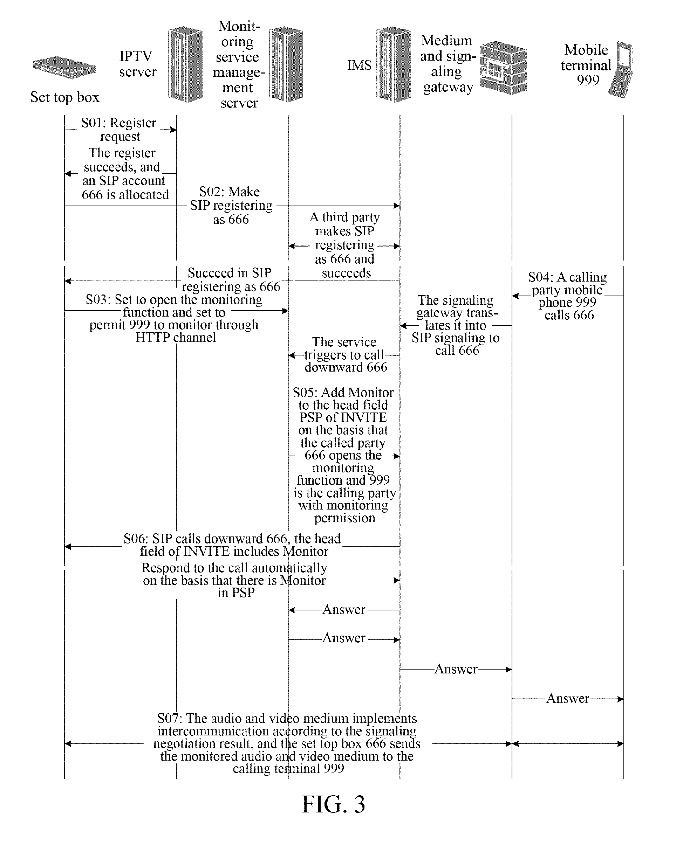

As shown in FIG. 3, the monitoring method according to the present embodiment comprises steps S01-07:
In S01, when the IPTV set top box registers with the IPTV server, the IPTV server allocates the IPTV set top box an SIP account 666 and a password, and the registered address and port number of the IMS core network.
In S02, the IPTV set top box initiates an SIP register to the IMS core network, and the IMS core network initiates a third party register to the monitoring service management server; after the register succeeds, the IPTV set top box may receive the SIP call.
In S03, the IPTV set top box establishes the data link channel with the monitoring service management server by HTTP, opens the monitoring function, sets the calling number 999 as a calling number with the permission of initiating monitoring, and synchronizes the calling number 999 to the monitoring service management server after the setting completes.
In S04, the request of the calling party 999 calling the called party 666 arrives at the signaling gateway; the signaling gateway translates the request into an SIP call request to be routed to the IMS core network; and the IMS core network triggers the call request to the monitoring service management server.
In S05, the monitoring service management server adds Monitor to the head field P-Service-Param of the INVITE sent to 666 on the basis that 666 has opened the monitoring function and 999 has been set as the calling number with permission of initiating monitoring, and the INVITE is routed through the IMS core network to the IPTV set top box where 666 is located.
In S06, 666 finds there is Monitor in the received INVITE, and responds to the call automatically; the response is returned through the original route to the calling party 999, thereby the negotiation completes.
In S07, the called party 666 sends the audio and video medium to the calling party 999 through the medium gateway according to the negotiation result, then the calling party 999 displays the audio and video of the positions where the microphone and camera of the IPTV set top box, on which 666 is located, are located, thereby monitoring and surveillance are started successfully.

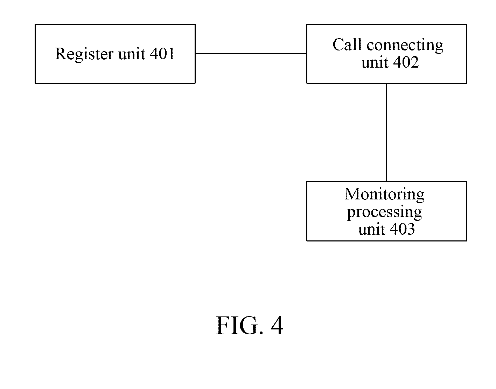

As shown in FIG. 4, the present embodiment also provides an IPTV set top box, comprising: a register unit 401, a call connecting unit 402 and a monitoring processing unit 403, wherein:
the register unit 401 is configured to: register with a monitoring service management server;
the call connecting unit 402 is configured to: receive a call request, and answer the call when the call request carries a monitoring identification configured by the monitoring service management server;
the monitoring processing unit 403 is configured to: send an audio acquired by an audio acquisition device and a video acquired by a video acquisition device to a terminal initiating the call request.
The register unit 401 is configured to perform register by means of: registering with an IPTV server, acquiring an account, registered address and port number; sending a register request to the monitoring service management server according to the account, registered address and port number.

Alternatively, the register unit 401 is configured to perform register by means of: registering with an IPTV server, acquiring an account, registered address and port number; sending a register request to the NGN core network or IMS core network according to the account, registered address and port number, and registering with the monitoring service management server through the NGN core network or the IMS core network.

The monitoring processing unit 403 is further configured to: after the register unit 402 registers with the monitoring service management server successfully, establish a data link channel with the monitoring service management server, inquire from the monitoring service management server for whether the monitoring processing unit 403 has monitoring permission through the established data link channel, and in the case of having the monitoring permission, inquire for whether a monitoring switch has been turned on and a list of calling numbers with permission of initiating monitoring.

The monitoring processing unit 403 is further configured to: turn on or turn off the monitoring switch through the data link channel according to an instruction of a subscriber, and update the list of calling numbers with permission of initiating monitoring.

The call connecting unit 402 is configured to: receive the call request from the monitoring service management server;
wherein, the monitoring service management server sends the call request configured with the monitoring identification to the call connecting unit 402 when the monitoring switch is turned on and the number of the terminal initiating the call request is included in the list of calling numbers with permission of initiating monitoring.

Alternatively, the call connecting unit 402 is configured to: receive the call request from the NGN core network or the IMS core network;
wherein, after receiving the call request from the medium and signaling gateway, the NGN core network or the IMS core network sends the call request to the monitoring service management server; the monitoring service management server sends the call request configured with the monitoring identification to the NGN core network or the IMS core network when the monitoring switch of the IPTV set top box is turned on and the number of the terminal initiating the call request is included in the list of calling numbers with permission of initiating monitoring; and the NGN core network or the IMS core network sends the call request to the call connecting unit 402.

The above content is the further detailed description of the present system and method made in combination with the specific embodiments, however, it cannot be considered that the specific implementation of the present system and method is only limited to this description. For the ordinary persons skilled in the art to which the present system and method belongs, a number of simple deductions or replacements can be made without departing from the idea of the present invention, and all of the simple deductions or replacements should fall into the protection scope of the present system and method.

### Industrial Applicability

The above technical solution applies the currently widely used IPTV set top box in the common family to perform audio monitoring and video surveillance. As long as providing the IPTV set top box with new microphone and camera, performing software update on the set top box, and providing the monitoring service management server in the IPTV system, the above technical solution can make a full use of the present IPTV network, IP network and communication network to achieve the goal of performing monitoring and surveillance on the audio and video of the positions where the microphone and camera connecting with the IPTV set top box are located through various audio and video terminals, overcoming the shortcomings such as the audio monitoring and video surveillance system having huge equipments, complex networking, high cost, and complicated engineering construction and so on. Therefore, the present invention has strong industrial applicability.

## Claims

1. A monitoring method, comprising:
an Internet Protocol Television (IPTV) set top box registering with a monitoring service management server; and
after registering with the monitoring service management server successfully, the IPTV set top box receiving a call request, and answering the call when the call request carries a monitoring identification configured by the monitoring service management server, and sending an audio acquired by an audio acquisition device and/or a video acquired by a video acquisition device to a terminal initiating the call request.

2. The monitoring method according to claim 1, wherein, the step of an IPTV set top box registering with a monitoring service management server comprises:
the IPTV set top box registering with an IPTV server, and acquiring an account, a registered address and a port number; and
the IPTV set top box sending a registering request to the monitoring service management server according to the account, the registered address and the port number.

3. The monitoring method according to claim 1, wherein, the step of an IPTV set top box registering with a monitoring service management server comprises:
the IPTV set top box registering with an IPTV server, and acquiring an account, a registered address and a port number; and
the IPTV set top box sending a registering request to a Next Generation Network (NGN) core network or an IP Multimedia System (IMS) core network according to the account, the registered address and the port number, and registering with the monitoring service management server through the NGN core network or the IMS core network.

4. The monitoring method according to claim 1, further comprising:
after registering with the monitoring service management server successfully, the IPTV set top box establishing a data link channel with the monitoring service management server, inquiring from the monitoring service management server for whether the IPTV set top box has monitoring permission through the established data link channel, and in a case of having monitoring permission, inquiring for whether a monitoring switch is turned on and a list of calling numbers with permission of initiating monitoring.

5. The monitoring method according to claim 4, further comprising:
the IPTV set top box turning on or turning off the monitoring switch through the data link channel according to an instruction of a subscriber, and updating the list of calling numbers with permission of initiating monitoring; or
the monitoring service management server providing a subscriber with an interface, receiving an instruction of turning on or turning off the monitoring switch from the subscriber and updating for the list of calling numbers with permission of initiating monitoring.

6. The monitoring method according to claim 4 or 5, wherein, the step of receiving a call request comprises:
the IPTV set top box receiving the call request from the monitoring service management server;
wherein, the monitoring service management server sends the call request configured with the monitoring identification to the IPTV set top box when the monitoring switch of the IPTV set top box is turned on and a number of the terminal initiating the call request is included in the list of calling numbers with permission of initiating monitoring.

7. The monitoring method according to claim 1, wherein, the step of receiving a call request comprises:
the IPTV set top box receiving the call request from a Next Generation Network (NGN) core network or an IP Multimedia System (IMS) core network;
wherein, after receiving the call request from a medium and signaling gateway, the NGN core network or the IMS core network sends the call request to the monitoring service management server, the monitoring service management server sends the call request configured with the monitoring identification to the NGN core network or the IMS core network when a monitoring switch of the IPTV set top box is turned on and a number of the terminal initiating the call request is included in the list of calling numbers with permission of initiating monitoring, and the NGN core network or the IMS core network sends the call request to the IPTV set top box.

8. An Internet Protocol Television (IPTV) set top box, comprising: a register unit, a call connecting unit and a monitoring processing unit, wherein:
the register unit is configured to: register with a monitoring service management server;
the call connecting unit is configured to: receive a call request, and answer the call when the call request carries a monitoring identification configured by the monitoring service management server;
the monitoring processing unit is configured to: send an audio acquired by an audio acquisition device and/or a video acquired by a video acquisition device to a terminal initiating the call request.

9. The IPTV set top box according to claim 8, wherein:
the monitoring processing unit is further configured to: establish a data link channel with the monitoring service management sever after the register unit registers with the monitoring service management server successfully, inquire from the monitoring service management server for whether the monitoring processing unit has a monitoring permission through the established data link channel, and in a case of having the monitoring permission, inquire for whether a monitoring switch is turned on and a list of calling numbers with permission of initiating monitoring.

10. The IPTV set top box according to claim 9, wherein:
the monitoring processing unit is further configured to: turn on or turn off the monitoring switch through the data link channel according to an instruction of a subscriber, and update the list of calling numbers with permission of initiating monitoring.

11. The IPTV set top box according to claim 8, wherein: the register unit is configured to perform register by means of:
registering with an IPTV server, acquiring an account, a registered address and a port number; and sending a register request to the monitoring service management server according to the account, the registered address and the port number; or
registering with an IPTV server, acquiring an account, a registered address and a port number; sending the register request to a Next Generation Network (NGN) core network or an IP Multimedia System (IMS) core network according to the account, the registered address and the port number, and registering with the monitoring service management server through the NGN core network or the IMS core network.

12. The IPTV set top box according to claim 8, wherein: the call connecting unit is configured to receive the call request by means of:
receiving the call request from the monitoring service management server; wherein, the monitoring service management server sends the call request configured with the monitoring identification to the call connecting unit when a monitoring switch of the IPTV set top box is turned on and a number of the terminal initiating the call request is included in the list of calling numbers with permission of initiating monitoring; or
receiving the call request from the Next Generation Network (NGN) core network or the IP Multimedia System (IMS) core network; wherein, after receiving the call request from a medium and signaling gateway, the NGN core network or the IMS core network sends the call request to the monitoring service management server, the monitoring service management server sends the call request configured with the monitoring identification to the NGN core network or the IMS core network when the monitoring switch of the IPTV set top box is turned on and a number of the terminal initiating the call request is included in the list of calling numbers with permission of initiating monitoring, and the NGN core network or the IMS core network sends the call request to the call connecting unit.
